# EUROPÄISCHE PATENTSCHRIFT

(11) **EP 1 717 931 B1**
(45) Veröffentlichungstag und Bekanntmachung des Hinweises auf die Patenterteilung: **14.05.2014**
(21) Anmeldenummer: 06112541.5
(22) Anmeldetag: 12.04.2006
(51) Int. Cl.: H02K 5/22

(54) **Motor-Schalter-Anordnung einer Handwerkzeugmaschine**
Motor switching device for hand held power tool
Dispositif interrupteur de moteur pour un outil portatif

(30) Priorität: 25.04.2005 DE 102005019197
(43) Veröffentlichungstag der Anmeldung: 02.11.2006
(73) Patentinhaber: HILTI Aktiengesellschaft, 9494 Schaan (LI)
(72) Erfinder: Britz, Rory, 86916 Kaufering (DE); Hofbrucker, Thomas, 82291, Mammendorf (DE); Ontl, Rainer, 86899, Landsberg am Lech (DE); Keller, Valentin, 86156, Augsburg (DE)
(74) Vertreter: Wildi, Roland

(56) Entgegenhaltungen:
- EP-A2- 1 104 080
- DE-A1- 3 147 418
- DE-A1- 3 606 926
- US-A- 5 170 851

## Beschreibung

Die Erfindung betrifft eine Motor-Schalter-Anordnung eines Handwerkzeuggerätes, wie einem Bohr-, Schraub-, Meissel-, Säge- oder Schleifgerät, mit einem Antriebsmotor und einem Schalter, mittels dem der Antriebsmotor betätigbar ist. Der Schalter ist mit einem Kontaktstecker fest oder beispielsweise über eine Steckverbindung lösbar elektrisch verbunden, wobei der Kontaktstecker Steckkontaktmittel aufweist. Die Steckkontaktmittel sind dabei komplementär zu Gegensteckkontaktmitteln des Antriebsmotors ausgeformt, um eine direkte elektrisch wirkende Steckverbindung zwischen dem Kontaktstecker und dem Antriebsmotor zu ermöglichen.

Derartige Motor-Schalter-Anordnungen, bei denen der elektrische Kontakt zwischen dem Schalter und dem Antriebsmotor mit Hilfe eines Kontaktsteckers über eine Steckverbindung erfolgt werden als alternative zu losen Litzenverbindungen vorgesehen, um eine einfachere Montage zu ermöglichen. Zudem können derartige Steckverbindungen derart ausgeformt werden, dass sie im endmontierten Zustand eine besonders stabile Verbindung bilden und dadurch im Betrieb durch Vibrationen oder Schläge verursachte Störungen oder Ausfälle verhindern.

Aus der DE 36 06 926 ist ein Elektrohandwerkzeug bekannt, bei dem sämtliche den elektrischen Schaltungsbereich betreffende Elemente als untereinander steckbare Blockbausteine gebildet sind. Dabei ist ein Brückenkontaktteil vorgesehen, das sowohl mit einem Schalter als auch mit einer Statorendscheibe des Antriebsmotors über Steckkontakte elektrisch verbunden ist.

Durch diese bekannte Motor-Schalter-Anordnung können viele den elektrischen Schaltungsbereich betreffenden Elemente vormontiert werden. Die Endmontage kann dadurch zumindest teilweise automatisch erfolgen.

Nachteilig an der bekannten Motor-Schalter-Anordnung ist, dass die einzelnen Komponenten exakt aufeinander abgestimmt sein müssen. Zudem ist es dabei erforderlich, dass die Steckkontaktmittel des Antriebsmotors in einer gut zugänglichen Position angeordnet sind, um die Verbindung mit dem als Kontaktstecker fungierenden Brückenkontaktteil zu ermöglichen.

Bei der Produktion einer Geräteserie mit verschieden ausgestatteten Gerätetypen kann dies dazu führen, dass beispielsweise wegen einer leicht veränderten Anordnung des Antriebsmotors entweder ein vollkommen anderes Brückenkontaktteil vorgesehen werden oder gänzlich auf eine Steckverbindung verzichtet werden muss. Hierdurch werden jedoch die Herstellungskosten beziehungsweise der Montageaufwand deutlich erhöht.

Der vorliegenden Erfindung liegt die Aufgabe zugrunde, bei der Herstellung eine Geräteserie mit verschieden ausgestatteten Gerätetypen die genannten Nachteile zu vermeiden und die Herstellungskosten zu vermindern.

Erfindungsgemäss wird die Aufgabe dadurch gelöst, dass zwischen dem Kontaktstecker des Schalters und dem Antriebsmotor ein Adapter angeordnet ist. An diesem ist ein Steckanschluss vorgesehen, durch den eine elektrisch wirkende erste Steckverbindung mit den Gegensteckkontaktmitteln des Antriebsmotors herstellbar ist. Zudem ist an dem Adapter ein Gegensteckanschluss vorgesehen, durch den eine elektrisch wirkende zweite Steckverbindung mit den Steckkontaktmitteln des Kontaktsteckers herstellbar ist. Der Gegensteckanschluss ist dabei beispielsweise über in den Adapter integrierte Leitungen oder Litzen mit dem Steckanschluss elektrisch verbunden ist.

Ein derartiger Adapter kann somit optional zwischen dem Kontaktstecker des Schalters und dem Antriebsmotor eingesetzt werden. Dies ermöglicht es bei einem Gerät die Steckkontaktmittel und Gegensteckkontaktmittel auch dann elektrisch zu verbinden, wenn diese im Vergleich zu einem anderen Gerät der gleichen Serie aufgrund einer geänderten Ausstattung, wie beispielsweise zusätzlicher Befestigungsmittel für eine Staubabsaugung, anders ausgerichtet sind und somit nicht direkt in Kontakt gebracht werden können. Hierdurch kann bei beiden Geräten die gleiche Motor-Schalter-Anordnung verwendet werden, wobei das Gerät mit der geänderten Anordnung des Kontaktsteckers zum Antriebsmotor zwischen beiden Elementen lediglich zusätzlich mit dem Adapter ausgestattet werden muss. Durch diese optimierte Gleichteilverwendung können die Gesamtherstellungskosten und der logistische Aufwand zur Herstellung unterschiedlicher Gerätetypen einer Geräteserie deutlich reduziert werden.

In einer bevorzugten Ausführungsform weisen sowohl der Steckanschluss und die Gegensteckkontaktmittel der ersten Steckverbindung als auch der Gegensteckanschluss und die Steckkontaktmittel der zweiten Steckverbindung jeweils zwei Flachstecker und zwei zu diesen komplementär ausgebildete Flachsteckerschlitze auf. Die Flachsteckerschlitze können dabei beispielsweise durch Metallhülsen oder durch zwei in etwa Y-förmig aneinander angeordnete Metallblättchen gebildet sein. Auf diese Weise kann sowohl zwischen dem Adapter und dem Kontaktstecker als auch zwischen dem Adapter und dem Antriebsmotor eine stabile Steckverbindung hergestellt werden.

Vorteilhafterweise definiert die erste Steckverbindung eine erste Verbindungsrichtung und die zweite Steckverbindung eine zweite Verbindungsrichtung, wobei die erste Verbindungsrichtung und die zweite Verbindungsrichtung quer zueinander stehen. Auf diese Weise kann der Adapter dazu dienen, einen gegenüber dem Kontaktstecker verdrehten Einbau des Motors auszugleichen und eine gute Zugänglichkeit bei der Herstellung der Steckverbindungen zu gewährleisten. Beispielsweise ist es hierdurch möglich, die erste Steckverbindung um etwa 90° versetzt zur zweiten Steckverbindung anzubringen, um den Antriebsmotor eines ersten Gerätes einer Serie senkrecht zur Ausrichtung eines Antriebsmotors eines zweiten Gerätes der gleichen Serie ausrichten zu können. Durch die zueinander verdrehten Verbindungsrichtungen beider Steckverbindungen kann dabei eine gleichbleibend einfache Montage gewährleistet werden.

In einer besonders bevorzugten Ausführungsform ist der Adapter an einem Stator des Antriebsmotors festlegbar, wodurch der Adapter am Antriebsmotor vormontiert werden kann, was die Endmontage des Werkzeuggerätes weiter vereinfacht.

Vorteilhafterweise ist dabei zwischen Adapter und Stator eine Rastverbindung vorgesehen, wodurch der Adapter auf den Motor aufgeclipst werden kann. Hierdurch wird einerseits eine besonders einfache Vormontage des Adapters am Antriebsmotor ermöglicht und zudem eine besonders stabile Lage des Adapters im endmontierten Zustand gewährleistet.

Ferner weist die Rastverbindung vorteilhafterweise schwenkbare Rasthaken am Adapter auf, die mit Rastaufnahmen an der Aussenseite des Stators verrastbar sind. Hierdurch können die am Motor benötigten Mittel für die Rastverbindung besonders einfach ausgeformt werden, beziehungsweise können gegebenenfalls bereits an einer Aussenseite des Motors bestehende Kanten, Nuten oder Absätze zur Aufnahme der Rasthaken genutzt werden. Auf diese Weise können die Herstellungskosten gering gehalten werden.

Zudem ist es günstig, wenn der Adapter im eingebauten Zustand bereichsweise an einem Gehäuse des Handwerkzeuggerätes anliegt. Hierdurch wird der Adapter in der endmontierten Position zusätzlich gesichert.

Die Erfindung wird nachstehend anhand zweier Ausführungsbeispiele näher erläutert. Es zeigen:
- Fig. 1: eine Ansicht eines Handwerkzeuggerätes, bei dem sich die Bürstenhalter in Arbeitsrichtung erstrecken,
- Fig. 2: eine explodierte Ansicht eines Handwerkzeuggerätes, bei dem sich die Bürstenhalter quer zur Arbeitsrichtung erstrecken,
- Fig.3: eine perspektivische Explosionsdarstellung einer Motor-Schalter-Anordnung des Handwerkzeuggerätes nach Fig. 2,
- Fig. 4: eine Ansicht der Motor-Schalter-Anordnung nach Fig. 3 im eingebauten Zustand und
- Fig. 5: einen Schnitt durch die Ebene V-V in Fig. 4,

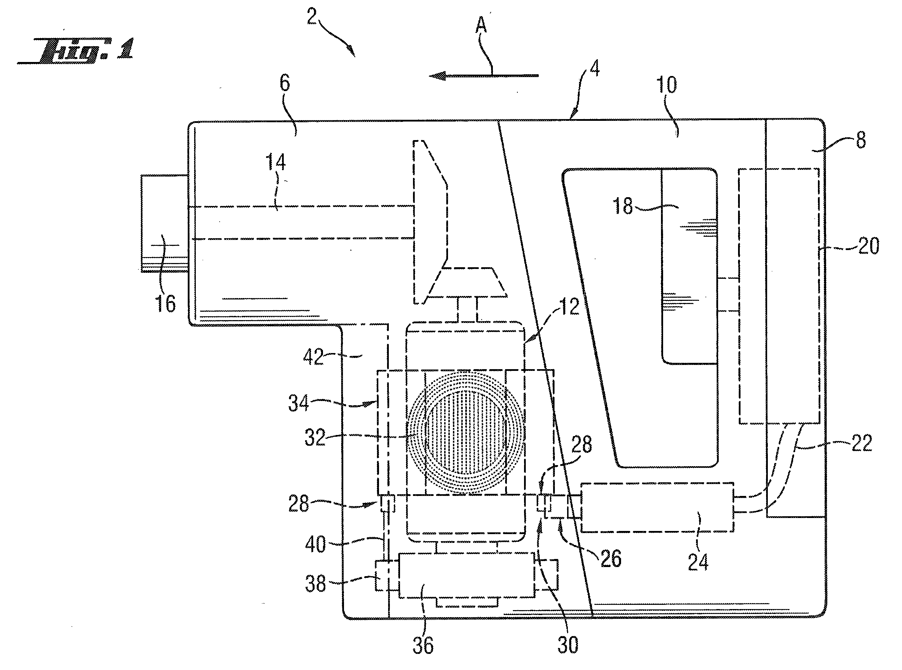

Fig. 1 zeigt ein Handwerkzeuggerät 2 in Form eines Bohrgerätes mit einem Gehäuse 4, das sich im Wesentlichen aus einem Motor-Getriebe-Gehäuse 6 und einem durch einen Griffdeckel 8 verschliessbaren Griffgehäuse 10 zusammensetzt. Statt einem Bohrgerät kann die Erfindung auch jedes andere elektrisch betriebene Handwerkzeuggerät 2 betreffen, wie beispielsweise ein Schraub-, Meissel-, Säge- oder Schleifgerät.

In dem Motor-Getriebe-Gehäuse 6 ist ein Antriebsmotor 12 untergebracht, der über eine Werkzeugspindel 14 eine Werkzeugaufnahme 16 antreibt. Die Werkzeugaufnahme ist an einem in Arbeitsrichtung A des Handwerkzeuggerätes 2 stehenden Ende des Motor-Getriebe-Gehäuses 6 angeordnet.

In dem Griffgehäuse 10 ist ein über einen Drücker 18 betätigbarer Schalter 20 untergebracht, der über Litzen 22 mit einem Kontaktstecker 24 verbunden ist. Dieser Kontaktstecker 24 weist Steckkontaktmittel 26 auf, die mit Gegensteckkontaktmitteln 28 des Antriebsmotors 12 eine elektrisch wirkende Steckverbindung 30 herstellen. Über diese Steckverbindung 30 wird eine gepunktet dargestellte Statorwicklung 32 eines Stators 34 des Antriebsmotors 12 in nicht näher dargestellter Weise mit Strom versorgt.

Ferner weist der Antriebsmotor 12 einen Bürstenhalter 36 auf, an dem zwei Kohlenführungen 38 an gegenüberliegenden Seiten in Arbeitsrichtung A abragen. Die Kohlenführungen 38 sind über eine lediglich angedeutete Verbindung 40 ebenfalls mit der Statorwicklung 32 elektrisch verbunden.

Das in Fig. 1 dargestellte Werkzeuggerät 2 ist ein bestimmter Gerätetyp einer Geräteserie, die mehrere Gerätetypen mit verschiedenen Ausstattungen umfasst. Ein anderer Gerätetyp benötigt für ein zusätzliches Ausstattungsmerkmal, wie beispielsweise eine nicht dargestellte Staubabsaugung, einen gewissen Bauraum 42 des Motor-Getriebe-Gehäuses 6, der in Fig. 1 durch eine strichpunktierte Begrenzungslinie angedeutet ist. Wie aus dieser Darstellung zu entnehmen ist, ragt der Antriebsmotor 12 teilweise in diesen Bauraum 42 hinein. Somit ist die ist die Umsetzung des genannten Ausstattungsmerkmals an der Ausführungsform des Handwerkzeuggerätes 2 nach Fig. 1 nicht möglich.

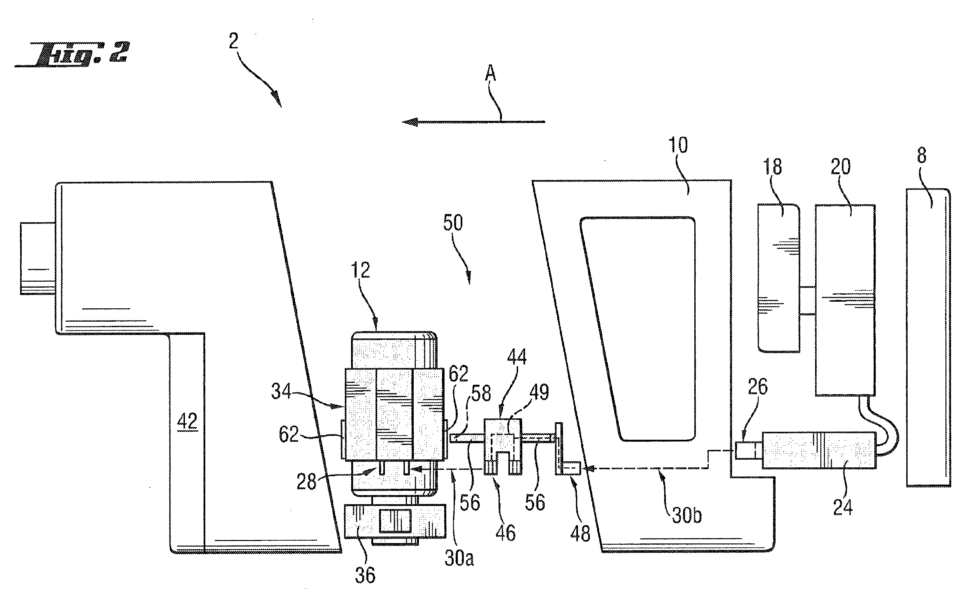

Fig. 2 zeigt einen Gerätetyp des Handwerkzeuggerätes 2, bei dem der Bauraum 42 für die zusätzliche Ausstattung verwendet wird und somit nicht für den Antriebsmotor 12 zur Verfügung steht. Um dennoch den baugleichen Antriebsmotor 12 weiterverwenden zu können, ist dieser um 90° um seine Antriebsachse gedreht, so dass die Kohlenführungen 38 und die grössere Breite des Stators 34 nun quer zur Arbeitsrichtung A stehen. Ferner wird auch der gleiche Schalter 20 mit dem Kontaktstecker 24 verwendet, wobei diese unverändert in dem Griffgehäuse 10 angeordnet werden.

Um die elektrische Verbindung zwischen dem Antriebsmotor 12 und dem Kontaktstecker 24 des Schalters 20 bei dieser geänderten Position des Antriebsmotors 12 herstellen zu können, ist ein Adapter 44 vorgesehen. Dieser weist einen Steckanschluss 46, der mit den Gegensteckkontaktmitteln 28 des Antriebsmotors 12 elektrisch und mechanisch verbindbar ist und einen Gegensteckanschluss 48 auf, der mit den Steckkontaktmitteln 26 des Kontaktsteckers 24 des Schalters 20 elektrisch und mechanisch verbindbar ist. Der Steckanschluss 46 ist mit dem Gegensteckanschluss 48 dabei über eine am Adapter 44 vorgesehene Litzenanordnung 49 elektrisch verbunden.

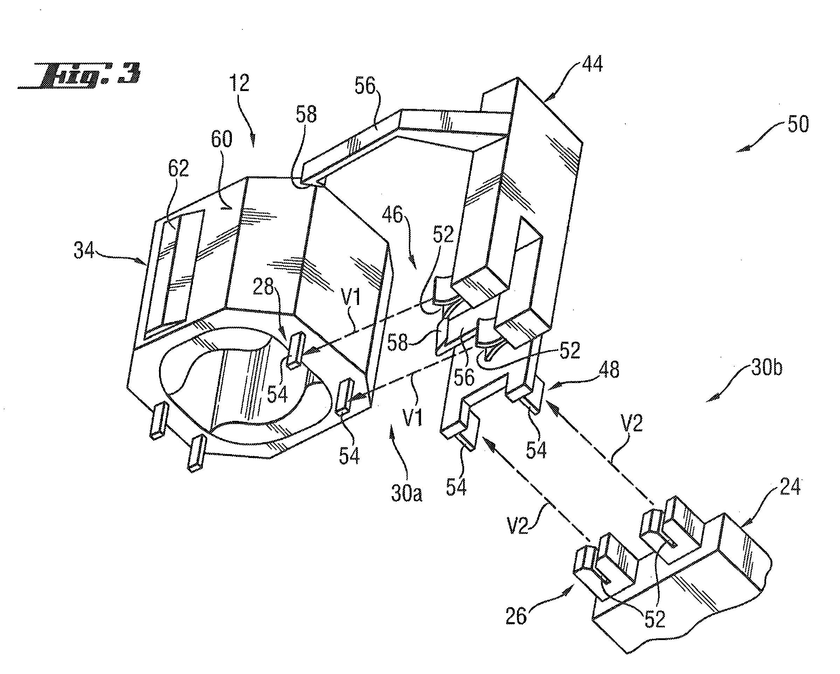

Schalter 20 mit Kontaktstecker 24, Antriebsmotor 12 und Adapter 44 bilden eine insgesamt mit 50 bezeichnete Motor-Schalter-Anordnung, die in Fig. 3 detailliert dargestellt ist.

Wie aus Fig. 3 zu entnehmen ist, bilden sowohl die Steckkontaktmittel 26 des Kontaktsteckers 24 als auch der Steckanschluss 46 des Adapters 44 jeweils zwei Flachsteckerschlitze 52 aus. Im Falle des Steckanschlusses 46 sind die Flachsteckerschlitze 52 durch jeweils zwei Kontaktblättchen geformt, die Y-förmig vom Adapter 44 abragen. Im Falle der Steckkontaktmittel 26 sind die Flachsteckerschlitze 52 durch eingeschlitzte Kunststoffelemente gebildet, an denen nicht näher dargestellte elektrische Kontakte vorgesehen sind. Die Flachsteckerschlitze 52 sind dabei jeweils komplementär zu jeweils zwei Flachsteckern 54 ausgebildet, die am Gegensteckanschluss 48 des Adapters 44 und an den Kontaktmitteln 28 des Antriebsmotors 12 vorgesehen sind.

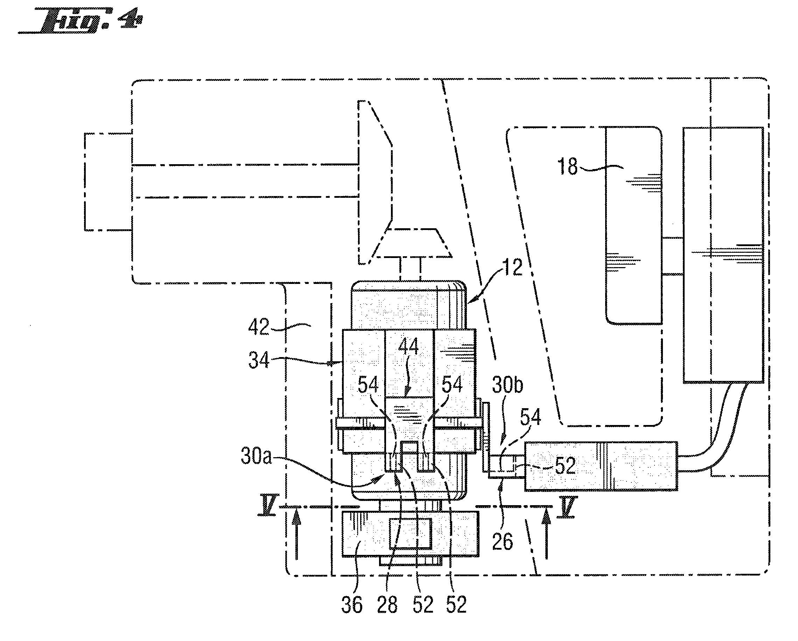

Wie ferner in Fig. 3 dargestellt, wird der Steckanschluss 46 des Adapters 44 bei der Montage entlang einer ersten Verbindungsrichtung V1 auf die Gegensteckkontaktmittel 28 des Antriebsmotors 12 aufgeschoben, um eine erste Steckverbindung 30a herzustellen, wie sie insbesondere aus Fig. 4 zu entnehmen ist. Dabei werden die Flachstecker 54 der Gegensteckkontaktmittel 28 in den komplementär ausgeformten und angeordneten Flachsteckerschlitzen 52 des Steckanschlusses 46 aufgenommen.

Des Weiteren werden bei der Montage, wie ebenfalls aus Fig. 3 zu entnehmen ist, die Steckkontaktmittel 26 des Kontaktsteckers 24 entlang einer zur ersten Verbindungsrichtung V1 quer stehenden zweiten Verbindungsrichtung V2 auf den Gegensteckanschluss 48 des Adapters 44 aufgeschoben, um eine zweite Steckverbindung 30b herzustellen, wie sie insbesondere aus Fig. 4 zu entnehmen ist. Dabei werden die Flachstecker 54 des Gegensteckanschlusses 48 in den komplementär ausgeformten und angeordneten Flachsteckerschlitzen 52 der Steckkontaktmittel 26 aufgenommen.

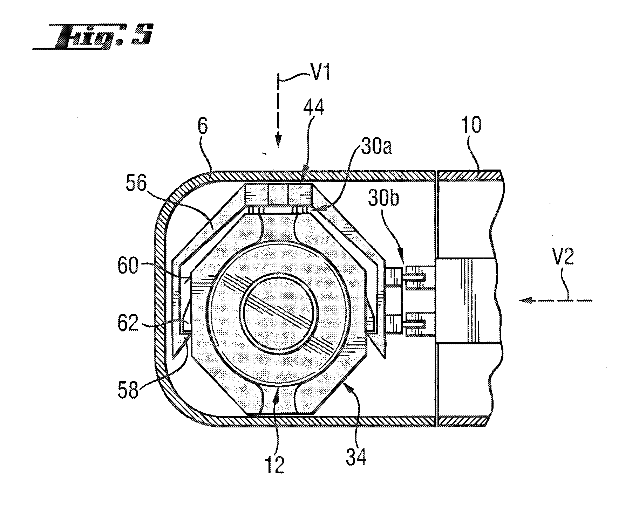

Wie insbesondere aus den Fig. 3 und 5 zu entnehmen ist, weist der Adapter 44 zwei sich gegenüber liegende Federarme 56 auf, an deren freien Ende jeweils ein Rasthaken 58 ausgebildet ist. An gegenüber liegenden Seite einer Aussenfläche 60 des Stators 34 sind zudem in etwa rampenförmige Aufsätze ausgeformt. Diese bilden Kanten aus, die von den Rasthaken 58 hintergriffen werden können und somit als Rastaufnahmen 62 fungieren. Auf diese Weise bilden die Rasthaken 58 und die Rastaufnahmen 62 eine Rastverbindung, mittels der der Adapter 44 am Antriebsmotor 12 vormontiert werden kann.

Zur Montage der Motor-Schalter-Anordnung 50 in dem Gehäuse 4 kann somit der Adapter 44 bei der Herstellung der ersten Steckverbindung 30a entlang der ersten Verbindungsrichtung V1 gleichzeitig auf den Stator 34 aufgeclipst werden. Anschliessend wird der Antriebsmotor 12 zusammen mit dem aufgeclipsten Adapter 44 derart in das Motor-Getriebe-Gehäuse 6 eingebaut, dass der Adapter, wie in Fig. 5 dargestellt, zumindest auf der Seite der ersten Steckverbindung 30a an dem Motor-Getriebe-Gehäuse 6 anliegt, um die erste Steckverbindung 30 a zusätzlich zu sichern. Die zueinander quer stehende Ausrichtung der Verbindungsrichtungen V1 und V2 ermöglicht anschliessend eine problemlose Herstellung der zweiten Steckverbindung 30b entlang der zweiten Verbindungsrichtung V2 beim Anbringen des Griffgehäuses 10 am Motor-Getriebe-Gehäuse 6.

## Patentansprüche

1. Motor-Schalter-Anordnung (50) eines Handwerkzeuggerätes (2)
mit einem Antriebsmotor (12) und
einem Schalter (20), mittels dem der Antriebsmotor (12) betätigbar ist und der mit einem Kontaktstecker (24) elektrisch verbunden ist, der Steckkontaktmittel (26) aufweist, die komplementär zu Gegensteckkontaktmitteln (28) des Antriebsmotors (12) ausgeformt sind, um eine elektrisch wirkende Steckverbindung (30) zwischen dem Kontaktstecker (24) und dem Antriebsmotor (12) zu ermöglichen,
**dadurch gekennzeichnet, dass** zwischen dem Kontaktstecker (24) des Schalters (20) und dem Antriebsmotor (12) ein Adapter (44) angeordnet ist, an dem sowohl ein Steckanschluss (46), durch den eine elektrisch wirkende erste Steckverbindung (30a) mit den Gegensteckkontaktmitteln (28) herstellbar ist, als auch ein Gegensteckanschluss (48) vorgesehen ist, durch den eine elektrisch wirkende zweite Steckverbindung (30b) mit den Steckkontaktmitteln (26) herstellbar ist und der mit dem Steckanschluss (46) elektrisch verbunden ist.

2. Motor-Schalter-Anordnung nach Anspruch 1, **dadurch gekennzeichnet, dass** sowohl der die erste Steckverbindung (30a) als auch die zweite Steckverbindung (30b) jeweils zwei Flachstecker (54) und zwei zu diesen komplementär ausgebildete Flachsteckerschlitze (52) aufweisen.

3. Motor-Schalter-Anordnung nach Anspruch 1 oder 2, **dadurch gekennzeichnet, dass** die erste Steckverbindung (30a) eine erste Verbindungsrichtung (V1) und die zweite Steckverbindung (30b) eine zweite Verbindungsrichtung (V2) definiert, wobei die erste Verbindungsrichtung (V1) und die zweite Verbindungsrichtung (V2) quer zueinander stehen.

4. Motor-Schalter-Anordnung nach einem der Ansprüche 1 bis 3, **dadurch gekennzeichnet, dass** der Adapter (44) an einem Stator (34) des Antriebsmotors (12) festlegbar ist.

5. Motor-Schalter-Anordnung nach Anspruch 4, **dadurch gekennzeichnet, dass** zwischen Adapter (44) und Stator (34) eine Rastverbindung vorgesehen ist.

6. Motor-Schalter-Anordnung nach Anspruch 5, **dadurch gekennzeichnet, dass** die Rastverbindung schwenkbare Rasthaken (58) am Adapter (44) aufweist, die mit Rastaufnahmen (62) an einer Aussenfläche (60) des Stators (34) verrastbar sind.

7. Handwerkzeuggerät mit einer Motor-Schalter-Anordnung nach einem der Ansprüche 1 bis 6, **dadurch gekennzeichnet, dass** der Adapter (44) im eingebauten Zustand bereichsweise an einem Gehäuse (6) anliegt.

## Claims

1. Motor and switch arrangement (50) of a hand-held power tool (2), having a drive motor (12) and having a switch (20) by means of which the drive motor (12) can be actuated and which is electrically connected to a contact-equipped connector (24) which has insertion-type contact means (26) which are of a complementary form to mating insertion-type contact means (28) of the drive motor (12), to make possible an electrically effective plug-in connection (30) between the contact-equipped connector (24) and the drive motor (12), **characterised in that** there is arranged between the contact-equipped connector (24) of the switch (20) and the drive motor (12) an adapter (44) at which provision is made both for a plug-in union (46) by which a first electrically effective plug-in connection (30a) can be made to the mating insertion-type contact means (28) and for an opposed plug-in union (48) by which a second electrically effective plug-in connection (30b) can be made to the insertion-type contact means (26) and which is electrically connected to the plug-in union (46).

2. Motor and switch arrangement according to claim 1, **characterised in that** both the first plug-in connection (30a) and the second plug-in connection (30b) each have two flat male contacts (54), and two slots (52) for flat male contacts which are formed to be complementary thereto.

3. Motor and switch arrangement according to claim 1 or 2, **characterised in that** the first plug-in connection (30a) defines a first direction of connection (V1) and the second plug-in connection (30b) defines a second direction of connection (V2), the first direction of connection (V1) and second direction of connection (V2) being transverse to one another.

4. Motor and switch arrangement according to one of claims 1 to 3, **characterised in that** the adapter (44) can be fixed to a stator (34) of the drive motor (12).

5. Motor and switch arrangement according to claim 4, **characterised in that** a latching connection is provided between the adapter (44) and the stator (34).

6. Motor and switch arrangement according to claim 5, **characterised in that** the latching connection has pivotable latching hooks (58) on the adapter (44) which can be latched to receiving means for latching (62) on an external surface (60) of the stator (34).

7. Hand-held power tool having a motor and switch arrangement according to one of claims 1 to 6, **characterised in that** a region or regions of the adapter (44) rest against a housing (6) in the installed state.

## Revendications

1. Ensemble interrupteur-moteur (50) d'un outil portatif (2),
comprenant un moteur d'entraînement (12) et
un interrupteur (20), au moyen duquel le moteur d'entraînement (12) peut être actionné et qui est électriquement relié à une fiche de contact (24) présentant des moyens de contact par enfichage (26), qui sont formés en complément de moyens de contact par enfichage complémentaires (28) du moteur d'entraînement (12) afin de permettre une connexion par enfichage (30) électrique entre la fiche de contact (24) et le moteur d'entraînement (12),
**caractérisé en ce qu'**est prévu, entre la fiche de contact (24) de l'interrupteur (20) et le moteur d'entraînement (12), un adaptateur (44) au niveau duquel sont prévus aussi bien une prise de courant enfichable (46), laquelle permet d'établir une première connexion par enfichage (30a) électrique avec les moyens de contact par enfichage complémentaires (28), ainsi qu'une prise de courant enfichable complémentaire (48), qui permet d'établir une deuxième connexion par enfichage (30b) électrique avec les moyens de contact par enfichage (26) et qui est reliée de manière électrique à la prise de courant enfichable (46).

2. Ensemble interrupteur-moteur selon la revendication 1, **caractérisé en ce qu'**aussi bien la première connexion par enfichage (30a) que la deuxième connexion par enfichage (30b) présentent respectivement deux fiches mâles plates (54) et deux fentes de fiche mâle plate (52) complémentaires.

3. Ensemble interrupteur-moteur selon la revendication 1 ou 2, **caractérisé en ce que** la première connexion par enfichage (30a) définit une première direction de connexion (V1) et la deuxième connexion par enfichage (30b) définit une deuxième direction de connexion (V2), sachant que la première direction de connexion (V1) et la deuxième direction de connexion (V2) sont perpendiculaires entre elles.

4. Ensemble interrupteur-moteur selon l'une quelconque des revendications 1 à 3, **caractérisé en ce que** l'adaptateur (44) peut être fixé au niveau d'un stator (34) du moteur d'entraînement (12).

5. Ensemble interrupteur-moteur selon la revendication 4, **caractérisé en ce qu'**est prévue, entre l'adaptateur (44) et le stator (34), une connexion par enclenchement.

6. Ensemble interrupteur-moteur selon la revendication 5, **caractérisé en ce que** la connexion par enclenchement présente, au niveau de l'adaptateur (44), des crochets d'enclenchement (58) pouvant pivoter, lesquels peuvent s'enclencher avec des logements d'enclenchement (62) au niveau d'une surface extérieure (60) du stator (34).

7. Outil portatif comprenant un ensemble interrupteur-moteur selon l'une quelconque des revendications 1 à 6, **caractérisé en ce que**, à l'état monté, l'adaptateur (44) repose ponctuellement sur un boîtier (6).
